# EUROPEAN PATENT SPECIFICATION

(11) **EP 1 540 871 B1**
(45) Date of publication and mention of the grant of the patent: **10.01.2007**
(21) Application number: 02722326.2
(22) Date of filing: 15.05.2002
(51) Int. Cl.: H04L 1/24, H04L 5/14

(54) **METHOD AND ARRANGEMENT FOR ADJUSTING TRANSMISSION POWER IN A DIGITAL SUBSCRIBER LINE**
VERFAHREN UND ANORDNUNG ZUR EINSTELLUNG DER SENDELEISTUNG IN EINER DIGITALEN TEILNEHMERLEITUNG
PROCEDE ET ARRANGEMENT PERMETTANT D'AJUSTER LA PUISSANCE DE TRANSMISSION DANS UNE LIGNE D'ABONNE NUMERIQUE

(43) Date of publication of application: 15.06.2005
(73) Proprietor: Wireless Lan Systems Oy, 02150 Espoo (FI)
(72) Inventor: ETELÄNIEMI, Veli, FIN-02400 Kirkkonummi (FI); SAREN, Panu, FIN-20100 Turku (FI); TOMMISKA, Antti, FIN-00350 Helsinki (FI)
(74) Representative: Lomas, Geoffrey Michael
(86) International application number: PCT/FI2002/000416
(87) International publication number: WO 2003/098862

(56) References cited:
- WO-A1-00/67385
- WO-A1-01/39481
- WO-A1-02/11369

## Description

### Field of the Invention

This invention relates to digital subscriber lines and particularly adjusting transmission power in them. More especially, the invention relates to power adjustment at the beginning of the transmission in a digital subscriber line.

### Background of the Invention

Digital Subscriber Line (DSL) is a common term for various techniques, which make it possible to transmit digital traffic over ordinary telephone lines. Thus, a normally used abbreviation is xDSL wherein x can be replaced by a letter that identifies the technique in question. So the acronym xDSL refers collectively to a number of variations of the DSL technology, which aim at utilizing the information transmission capability of ordinary copper wires to the greatest possible extent. Known variations that go under the umbrella definition of xDSL are at the priority date of this patent application ADSL (Asymmetric Digital Subscriber Line), CDSL (Consumer DSL, registered trademark of Rockwell International Corp.), G.Lite (also known as DSL Lite, splitterless ADSL, and Universal ADSL; officially ITU-T standard G-992.2), HDSL (High bit-rate DSL), RADSL (Rate-Adaptive DSL), SDSL (Symmetric DSL), SHDSL (Symmetric High bit-rate DSL.), VDSL (Very high data rate DSL) and even to some extent UDSL (Unidirectional DSL), which is only a proposal, and IDSL (ISDN DSL), which is actually closer to ISDN (Integrated Services Digital Network).

As mentioned, the DSL technology provides transport of digital information over telephone subscriber lines. High speed digital transmission via telephone lines requires advanced signal processing to overcome transmission impairments, due to the crosstalk from the signals present on other wires in the same cable, and signal reflections.

A major problem, especially in VDSL systems, in the above-mentioned techniques is an upstream power back off (UPBO). In the UPBO technique, a CPE measures an average signal level from a downstream signal, normally from a downstream handshake signal, for estimating the attenuation of signals in the subscriber line. Usually, the estimation utilizes the law of the square root of a frequency for obtaining the attenuation of the subscriber line in a used frequency range. Utilizing this attenuation information the transmission power level of upstream transmission is adjusted to be suitable in the CPE. It should be noted that the upstream term refers to an information flow whose direction is from an end-service customer system (customer premises equipment, CPE) to an end-service provider system (central office, CO). The downstream term refers to the transmission in the opposite direction.

This attenuation law is valid as long as there are no significant irregularities in loop topology, in other words no branches exist in a subscriber loop. The most important irregularity in view of the power back off is a so-called bridged tap that may increase the observed attenuation so much that the square-root law is not valid within the required accuracy. In such a case, the attenuation of a signal at the CPE-site will be overestimated and the transmission power for the upstream signal will be unnecessarily high. The result is that the power level of the upstream signal at the CO site is more than the accepted level according to relevant standards. The high power level increases crosstalk near the CO site reducing the performances of other VDSL lines in the same binder more than expected.

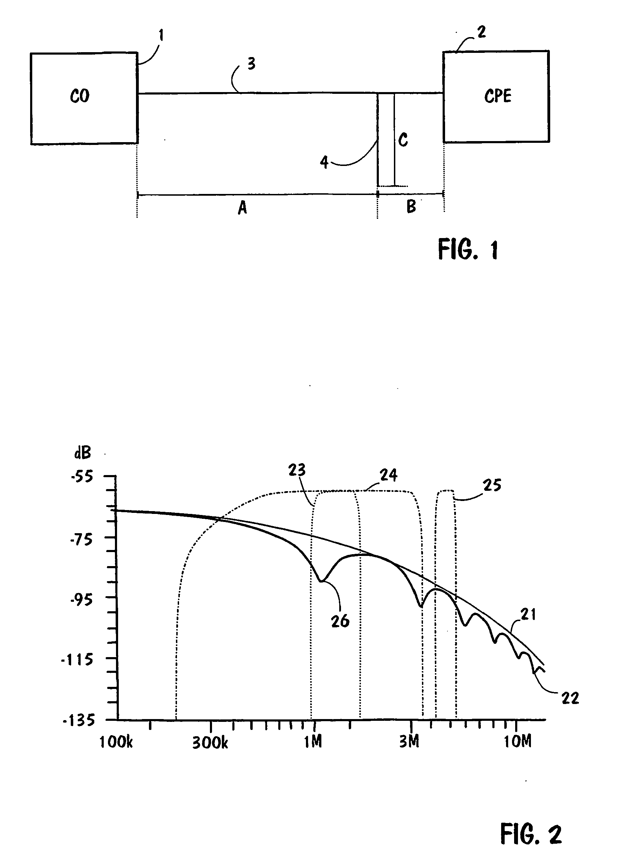

FIG. **1** illustrates an example of a subscriber loop with one bridged tap. The tap **4**, whose length is **C**, has been attached to the subscriber line **3**, at distance **A** from the CO **1** and distance **B** from the CPE **2**. FIG. **2** shows the effect of the bridged tap of FIG. **1** on the insertion loss of the subscriber loop. The bold solid line **22** describes the attenuation (insertion loss) with the bridged tap and the solid line **21** without the bridged tap. The dotted line **23** describes the downstream handshake signal, the dot-dashed line **24** the downstream VDSL carrier, and the other dot-dashed line b the upstream VDSL carrier. As can be seen, the square root attenuation law works well with the pure subscriber line, but with the bridged tap its accuracy decreases.

Naturally, when changing the point of the bridged tap at the subscriber line or the length of the bridged tap, or using an open-end tap or a closed end tap (Compare the distances **A, B**, and **C** in FIG. **1**.), the attenuation curve illustrated in FIG. **2** changes. The notches of the curve change the situation and depth in relation to the coordinate system used.

Since the level of the received downstream signal is normally estimated from the handshake signal **23** as its average power level, especially the existence notch **26** in the frequency range of the handshake signal causes the power level to be estimated incorrectly by using the square root attenuation law. Due to this, the transmission power level of the upstream direction is adjusted to be too high. This increases unwanted crosstalk to the other VDSL lines in the same binder and furthermore reduces their performance. Especially, the overestimated power level of a downstream signal at the beginning of transmission decreases the efficiency and quality of upstream transmission through the UPBO.

The current VDSL standards utilize the square root attenuation law for obtaining the attenuation of the signal (i.e., loop insertion loss) as a function of frequency. And as described above, the attenuation is estimated based on the signal level of the downstream handshake signal. This current method is sometimes referred to as a reference length method, since the attenuation in a subscriber line depends on the length of the line. The downstream handshake signal has a narrow bandwidth, typically 675 kHz. As was seen, a narrow bandwidth signal does not necessarily give the right attenuation information due to narrowband irregularities (such as notches), which lie in the frequency band of the downstream handshake signal.

The goal of this invention is to mitigate the above-mentioned problems. This is achieved in a way described in the claims.

### Summary of the Invention

The idea of the invention is to estimate the level of a received downstream signal twice at the beginning of transmission. The smaller estimation is used for adjusting the signal level of upstream transmission. This is possible and useful to make, since at first only a handshake signal is transmitted (both in the downstream and upstream directions). After a while, the real data transmission downstream bandwidth is taken into use, and the second level estimation can be calculated from it. In many cases, the use of the second estimation gives a more accurate result than using the normal estimation from the handshake signal, but sometimes it may give a worse result than the use of the first estimation. Thus both estimations should be used, and the best result for the upstream power level should preferably be selected.

So, the method according to the invention adjusts a transmission signal level of an upstream direction in a digital subscriber line between a central office and customer premises equipment using information from the transmission signal level of the downstream direction for the adjustment. The transmission signal level of the upstream direction is adjusted at the beginning of a transmission between the central office and the customer premises equipment, the method comprising the steps of: estimating an attenuation in the subscriber line from a handshake signal of the downstream direction; calculating a first transmission signal level for the upstream direction by using the estimated attenuation; adjusting the transmission signal level of the upstream direction to be the first transmission signal level; re-estimating the attenuation in the subscriber line from a carrier (data transmission) signal of the downstream direction; calculating a second transmission signal level for the upstream direction by using the re-estimated attenuation; selecting a lower signal level from the first and the second transmission signal level; and adjusting the transmission signal level of the upstream direction to be the selected signal level.

An inventive arrangement adjusts a transmission signal level of an upstream direction in a digital subscriber line between a central office and customer premises equipment, using information from a transmission signal level of a downstream direction for the adjustment. The arrangement comprises adaptable means for estimating attenuation in the subscriber line. The adaptable means are capable of making the estimation from a handshake signal of the downstream direction and from a carrier signal of the downstream direction. Further, the adaptive means preferably calculates a first transmission signal level for the upstream direction by using an estimated attenuation when the adaptable means has been adapted to estimate the attenuation from the handshake signal. When the adaptable means has been adapted to estimate attenuation from the carrier signal, a second transmission signal level for the upstream direction is calculated. The adaptive means may also be divided into two parts, the first part for the estimations, and the second part for the calculations. Furthermore, the arrangement comprises means for selecting the lower signal level from the first and the second transmission signal level, and means for adjusting the transmission signal level of the upstream direction at the beginning of a transmission between the central office and the customer premises equipment to be the selected signal level.

### Brief Description of the Drawings

In the following the invention is described in more detail by means of FIGs **1 - 10** in the attached drawings, where
- FIG. **1**: illustrates an example of a subscriber loop with one bridged tap;
- FIG. **2**: illustrates the effect of the bridged tap of FIG. **1** on the insertion loss of the subscriber loop;
- FIG. **3**: illustrates an example of the attenuation in a subscriber line with a bridged tap of a certain length;
- FIG. **4**: illustrates an example of the attenuation in the same subscriber line as in FIG. **3** with a bridged tap of another length of;
- FIG. **5**: illustrates a superimposed picture from FIGs **3** and **4**;
- FIG. **6**: illustrates the beginning of transmission in a subscriber loop;
- FIG. **7**: illustrates an example of the use of the invention at the beginning of transmission in a subscriber loop;
- FIG. **8**: illustrates another example of the use of the invention at the beginning of transmission in a subscriber loop;
- FIG. **9**: illustrates an example of the method according to the invention; and
- FIG. **10**: illustrates an example of an arrangement according to the invention.

### Detailed Description of the Invention

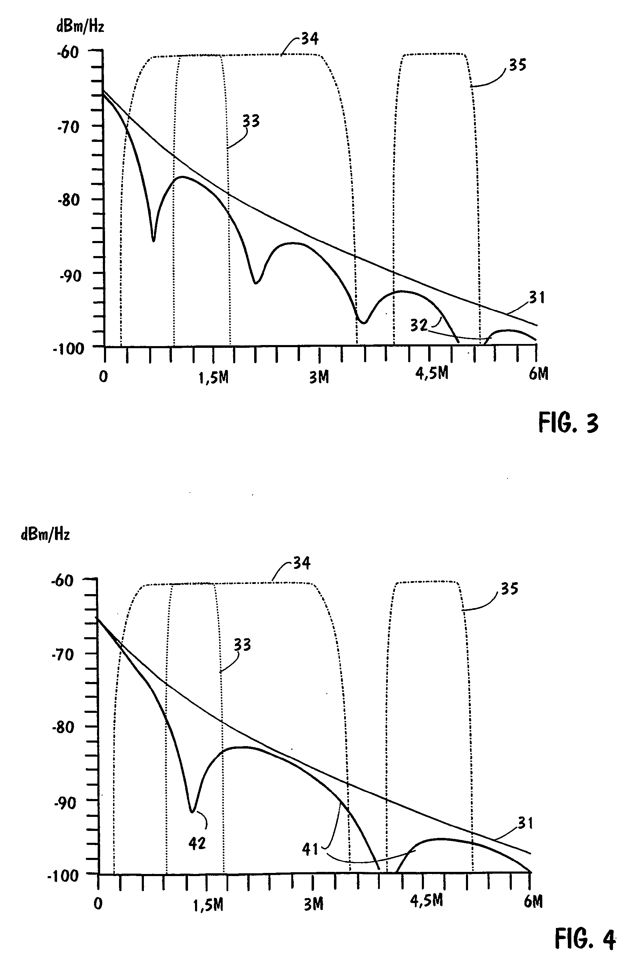

Let's take a more detailed look at the attenuation in a subscriber look in the example of FIG. **3**. If the subscriber loop was without a bridged tap, the attenuation, illustrated as curve **31**, would be very close to the square root attenuation law. But in this example, the bridged tap with a certain length exists, when the attenuation forms another curve **32**. As can be seen, the square root attenuation law is not accurate any more.. The dotted line **33** describes a downstream handshake signal of a VDSL system used, the dot-dashed line **34** the downstream VDSL carrier (data transmission signal), and the other dot-dashed line **35** the upstream VDSL carrier. However, the situation in this example is quite good, since the attenuation is usually estimated from the average power level of the handshake signal **33**, and the attenuation curve **32** does not have a notch in the frequency range of the handshake signal. Thus the square root attenuation law gives a relatively good result.

FIG. **4** illustrates an example of the attenuation in the same subscriber line as in FIG. **3** with a bridged tap of another length. Now, the bridged tap creates a notch **42** to the attenuation curve **41** in the frequency range of the handshake signal. Now, the square root attenuation law gives a very bad result, if it is used for estimating the attenuation according to the power level measurement of the handshake signal. It should be noted that the measurement is usually made at the central frequency of the handshake signal.

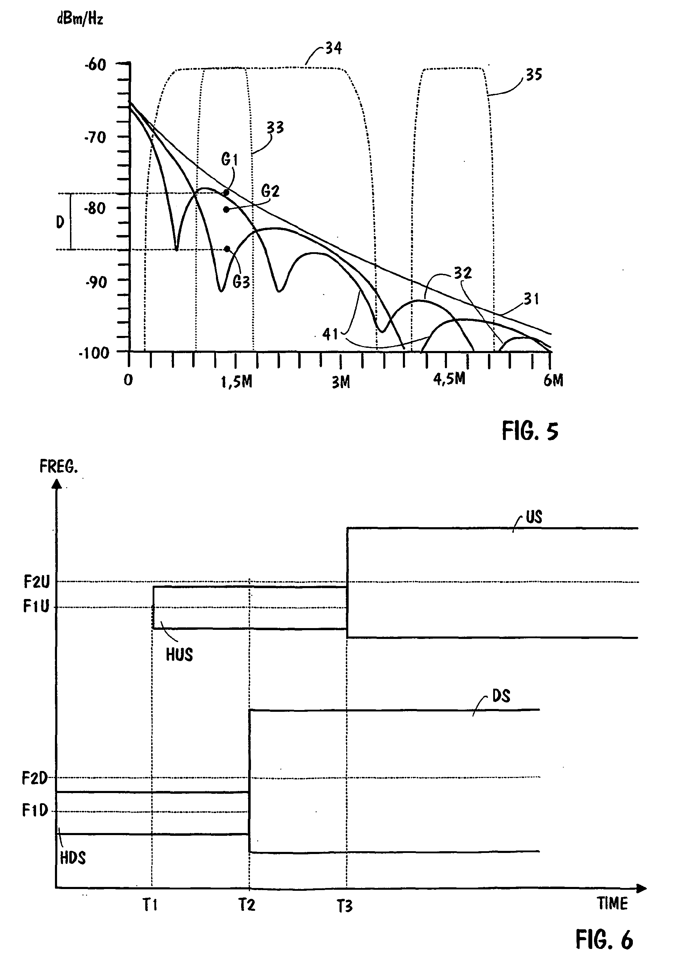

FIG. **5** illustrates a superimposed picture from FIGs **3** and **4**. Point **G1** is an ideal average power level of the handshake signal according to the square root attenuation law. Correspondingly **G2** is the average power level of the handshake signal in the case of FIG. **3**, and **G3** in the case of FIG. **4**. As can be seen, the difference D between the ideal case and the worst case (the situation of FIG. **4**) is 8 dBm. It is evident that the validity of the square root attenuation law depends strongly on the physical structure of a subscriber loop. Also possible construction changes in the subscriber loop may change the situation worse from the view of estimating the attenuation. Crosstalk in the adjacent loops near the CO may be fatal. This is especially a problem at the beginning of transmission, when the upstream transmission power is adjusted according to the UPBO.

At the beginning of transmission, handshake signals are transmitted both in the downstream and upstream direction before carrier (data transmission) signals are taken into use, as described in FIG. **6** concerning a known VDSL system. The downstream handshake signal **HDS** is sent from the CO to the CPE. The central frequency of the handshake signal is **F1D**. At moment **T1**, the CPE receives the downstream handshake signal, from which the average power level is measured for estimating the attenuation of the subscriber loop. The estimation is normally done using the square root attenuation law. The estimated attenuation is used for adjusting the upstream transmission power for the upstream handshake signal **HUS,** when the upstream transmission is turned on. It should be noted that in reality there exists a minor period between the moment when the CPE receives the downstream signal and when it sends the upstream signal, although the period (or corresponding periods when a signal is received in the CPE or CO) is not illustrated in FIG. **6**. The central frequency of the upstream handshake signal is **F1U.** At moment **T2**, the CO receives the upstream handshake signal, then it starts to transmit the downstream carrier signal **DS**. At moment **T3**, the CPE receives the downstream carrier signal, then it starts to transmit the upstream carrier signal **US**. The central frequency of the downstream carrier signal is **F2D**, and the central frequency of the upstream carrier signal is **F2U**.

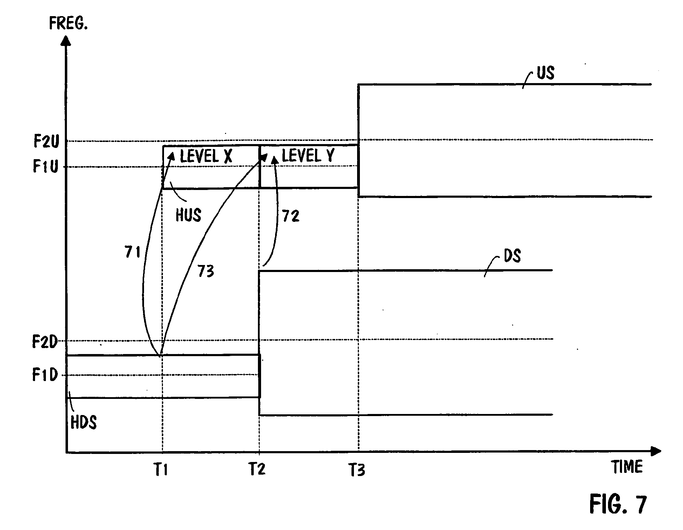

FIG. **7** illustrates an example of the use of the invention at the beginning of transmission in the subscriber loop. At moment **T1** the average power level of the downstream handshake signal is normally used **71** for adjusting the transmission power level of the upstream handshake signal, which in this case, becomes **X**. Now, according to the invention, it is realized that it is possible to estimate the attenuation of the subscriber loop from the downstream carrier signal at moment **T2** for adjusting **72** the transmission power level of the upstream handshake signal again. The power level becomes **Y** now.

It should be remembered that the power level of the upstream handshake signal naturally affects the power level of the upstream carrier signal, in other words the level of the handshake signal defines the level of the carrier signal. The adjusted level **Y** is often lower than the previously adjusted level **X**. However, level **X** may be the lower value, then it should be used **73** instead of level **Y**. Due to this, the lower level is selected. Since the frequency range and the central frequency **F2D** of the downstream carrier are different from the corresponding features of the downstream handshake signal, it is dear that if a notch in the attenuation curve (Compare FIGs **3, 4**, and **5**.) exists in the frequency range of the handshake signal a notch does not apparently and exactly exist in the central frequency **F2D** of the downstream carrier. In other words, the first estimation is corrected taking into account the differences in the bandwidths and average frequencies between the first and second estimation. The second estimation gives more information about the loop length estimation based on the downstream carrier signal. Due to this, the second estimation may be more accurate than the first estimation. The estimations are preferably made autonomously in the CPE to maintain compliance with VDSL standards.

The fast and accurate adjustment of the upstream transmission power level at the beginning of transmission is especially important, since it affects the rest of the transmission. The quality and performance of several subscriber loops in the same binder may decrease, if the adjustment is made improperly. Let's think about, for example, a binder that comprises 30 subscriber loops. If the upstream transmission power level of one of the loops is too high, noise from crosstalk interferes with other lines, especially near the CO. The worst case is between the lines of the farthest subscriber and the closest subscriber. A too high power level in the line of the closest subscriber interferes very strongly in the farthest subscriber line wherein the power level attenuates to be relatively low near the CO.

However, it is preferably to expect that in cases, where UPBO is applied for the power adjustment, the second estimation can be done in a very short time period, i.e. in less than one second after upstream transmission has been turned on.

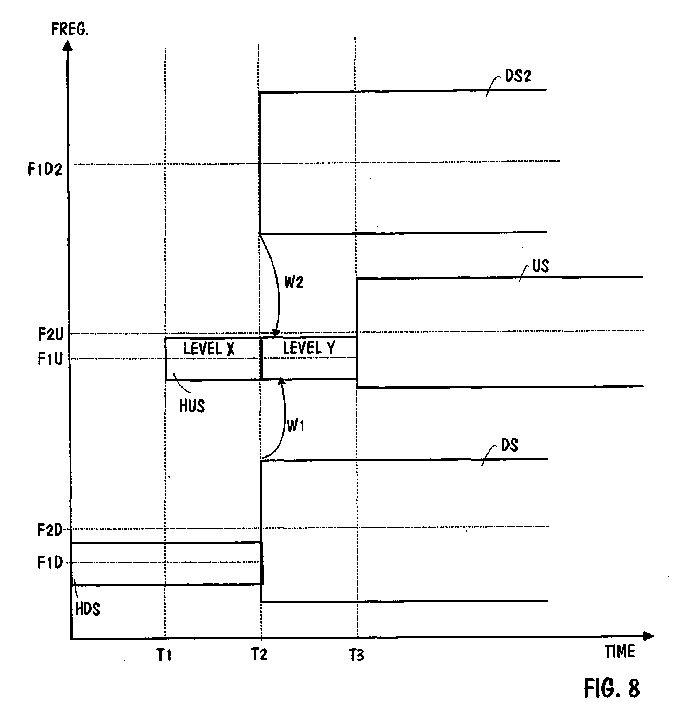

FIG. **8** illustrates another example of the use of the invention at the beginning of transmission in a subscriber loop. In this arrangement, two downstream carrier signals **DS** and **DS2** are used, both in different frequency ranges and with a different central frequency **F2D, F1D2**. Now, it is possible to use two measurements for adjusting level **Y** of the upstream handshake signal, as illustrated. Let's assume that level **X** is higher than any level of **Y** in this case. Level **Y** may be adjusted **W1** according to the attenuation the first downstream carrier **DS**, or according to the attenuation **W2** of the second downstream carrier **DS2**. Or both the attenuations are used **W1, W2** properly weighted for adjusting level **Y**. As can be noted, there exist several applications to use the invention, and estimations for the attenuation in the subscriber loop may be made from several downstream signals.

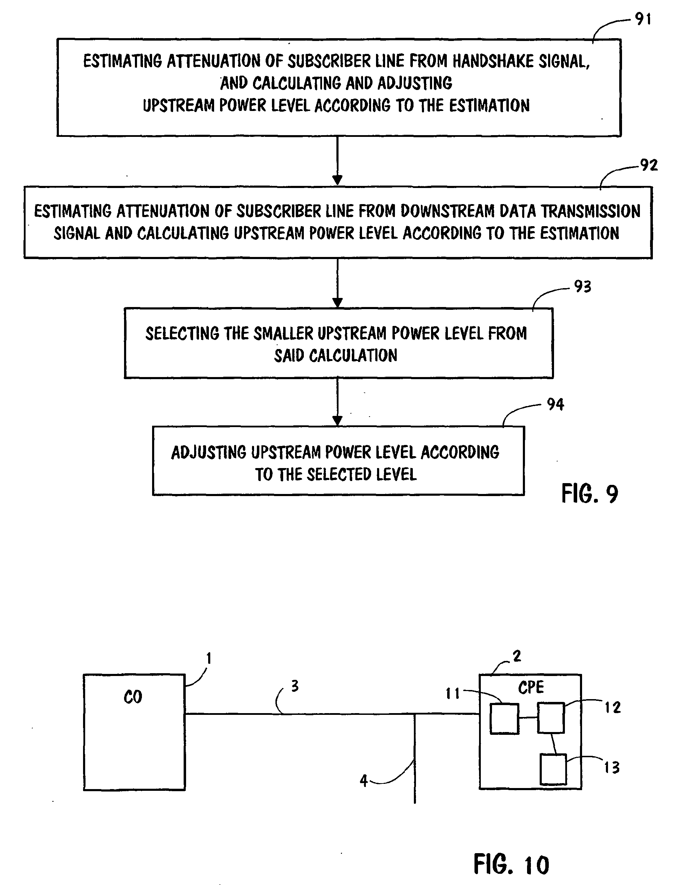

FIG. **9** shows an example of the method according to the invention. First, the attenuation of a subscriber loop is estimated from the downstream handshake signal **91**. The upstream transmission power level is calculated according to the estimation, and the upstream handshake signal is adjusted to be on the calculated level. When the downstream carrier signal is taken into use, the attenuation of the subscriber loop is estimated from it **92**. The upstream transmission power level is calculated according to the estimation. Next the lower calculated power level is selected **93** for readjusting the upstream handshake signal. Naturally the level of the handshake signal does not change, if the first calculated level is the lower one. Finally, the handshake signal is adjusted **94** to be on the selected level. It depends on the system used if the power levels of handshake signals and carrier signal are the same. However, the power level of an upstream carrier depends on the power level of the upstream handshake signal in some way. It should be noted that the attenuation estimations may be made normally using the square root attenuation law.

FIG. **10** illustrates an example of an arrangement according to the invention. Some means (such as special modules) are needed for realizing an inventive arrangement. There should be means **11** for estimating the attenuation of the subscriber line **3** in a CPE **2**. The estimating means **11** are adaptable for both a downstream handshake signal and a downstream carrier signal. The estimating means preferably calculates an upstream transmission power level as well, utilizing the estimated attenuation information. Further, the arrangement should comprise means **12** for selecting the lower power level from different calculations and means **13** for adjusting the power level of upstream transmission. These means are functionally connected to each others, preferably in a way illustrated in FIG. **10**.

It is obvious the inventive method or arrangement cannot handle irregularities that cause broadband attenuation. Such irregularities can be, for instance, water on cables and oxidations of cable joins. The major disadvantage in the broadband attenuation estimation is that RF-frequencies may increase the power levels, and thus the attenuation is less than the square-root law predicts. The net result will be that the power level for upstream transmission will be unnecessary low, but this is not in conflict with requirements in standards.

On the other hand, this type of information gives us a possibility to estimate whether notches should be enabled to reduce distortion at amateur radio frequencies. Obviously such an improvement involves information changes between CO- and CPE-site apparatus.

The invention reduces the period, in which the unacceptable high transmission power of an upstream signal is used. Moreover, the unacceptable high transmission power is used only at the beginning of transmission, and only with the upstream handshake signal in a relatively short period. Further, since the upstream handshake signal has a narrower bandwidth than the full upstream carrier signal, the distortion caused is considered to be at an acceptable level.

As illustrated above, in VDSL technology it is possible to use at least two different bands for upstream and downstream transmission. When information on two different downstream bands is available, each of them can be used in the second downstream signal attenuation estimation to obtain a more precise estimation. The second estimation mitigates the problem of broadband signal attenuation as well.

Furthermore, it may be possible that the transmission of the upstream signal will be restricted, for instance, for one second, until the downstream carrier signal is observed. This will reduce the period of an unacceptable high transmit power level to an acceptable period, but this involves changes in a state machine according to standards.

Yet another choice is that the upstream handshake signal is changed earlier to the upstream carrier signal than illustrated in FIGs 7 and **8**. This will probably introduce more distortion to other VDSL lines in the same binder, but a positive effect will be a very short time, because the power level is anyway re-estimated later.

Although, the invention is described in this text using the VDSL examples, it may be possible to use invention with the other DLS techniques as well. However, it is preferable to use the invention in the VDSL environment. Further, the invention is especially useful with a single-carrier modulation technique (SCM), but it may also be adapted to a multi-carrier modulation technique (MCM).

Due to the above-mentioned matters, it is evident that the invention can be used in various solutions, in the scope of the inventive idea.

## Claims

1. A method for adjusting a transmission signal level of an upstream direction in a digital subscriber line between a central office and customer premises equipment using information from a transmission signal level of a downstream direction for the adjustment, characteristic in that the method adjusts the transmission signal level of the upstream direction at the beginning of a transmission between the central office and the customer premises equipment, comprising the steps of
- estimating an attenuation in the subscriber line from a handshake signal of the downstream direction;
- calculating a first transmission signal level for the upstream direction by using the estimated attenuation;
- adjusting the transmission signal level of the upstream direction to be the first transmission signal level;
- re-estimating the attenuation in the subscriber line from a carrier signal of the downstream direction;
- calculating a second transmission signal level for the upstream direction by using the re-estimated attenuation;
- selecting the lower signal level from the first and the second transmission signal level; and
- adjusting the transmission signal level of the upstream direction to be the selected signal level.

2. A method according to claim 1, **characteristic in that** the re-estimation of the attenuation in the subscriber line is made from at least two carriers signals of the downstream direction.

3. A method according to claim 1 or 2, **characteristic in that** when adjusting the transmission signal level of the upstream direction to be the first transmission signal level, a handshake signal of the upstream direction is adjusted

4. A method according to claim 1, 2 or 3, **characteristic in that** when adjusting the transmission signal level of the upstream direction to be the selected transmission signal level, a handshake signal of the upstream direction is adjusted.

5. A method according to claim 4, **characteristic in that** the selected signal level defines a signal level of a transmission carrier signal level of the upstream direction.

6. A method according to any of claims 1-5, **characteristic in that** the estimating step and the re-estimating step utilizes a square root attenuation law.

7. A method according to any of claims 1-6, **characteristic in that** the digital subscriber line is a VDSL line.

8. A method according to any of claims 1 to 7, **characteristic in that** the digital subscriber line utilizes a single-carrier modulation technique.

9. An arrangement for adjusting a transmission signal level of an upstream direction in a digital subscriber line between a central office and customer premises equipment using information from a transmission signal level of a downstream direction for the adjustment, **characteristic in that** the arrangement comprises
- adaptable means for estimating an attenuation in the subscriber line from a handshake signal of the downstream direction and from a carrier signal of the downstream direction, and for calculating a first transmission signal level for the upstream direction by using an estimated attenuation when the adaptable means has been adapted to estimate the attenuation from the handshake signal, and for calculating a second transmission signal level for the upstream direction by using a second estimated attenuation when the adaptable means has been adapted to estimate the attenuation from the carrier signal;
- means for selecting the lower signal level from the first and the second transmission signal level; and
- means for adjusting the transmission signal level of the upstream direction at the beginning of a transmission between the central office and the customer premises equipment to be the selected signal level.

10. An arrangement according to claim 9, **characteristic in that** the adaptable means are divided into two modules, the first module for the estimating tasks and the second module for the calculating tasks.

11. An arrangement according to claim 9 or 10, **characteristic in that** the adaptable means utilize a square root attenuation law when estimating.

12. An arrangement according to any of claims 9 - 11, **characteristic in that** the digital subscriber line is a VDSL line.

13. An arrangement according to claim 12, characteristic in that the digital subscriber line utilizes a single-carrier modulation technique.

## Patentansprüche

1. Verfahren zur Anpassung eines Übertragungssignalpegels einer Upstream-Richtung in einem digitalen Teilnehmeranschluss zwischen einer Ausstattung eines zentralen Büros und einer Kundenniederlassung, welches Information aus einem Übertragungssignalpegel einer Downstream-Richtung für die Anpassung verwendet, **dadurch gekennzeichnet, dass** das Verfahren den Übertragungssignalpegel der Upstream-Richtung zu Beginn einer Übertragung zwischen einer Ausstattung des zentralen Büros und der Kundenniederlassung anpasst, umfassend die folgenden Schritte:
- Schätzen einer Dämpfung in dem Teilnehmeranschluss aus einem Handshake-Signal der Downstream-Richtung;
- Berechnung eines ersten Übertragungssignalpegels für die Upstream-Richtung durch Verwendung der geschätzten Dämpfung;
- Anpassen des Übertragüngssignalpegels der Upstream-Richtung, um den ersten Übertragungssignalpegel anzunehmen;
- Neuschätzen der Dämpfung in dem Teilnehmeranschluss aus einem Trägersignal der Downstream-Richtung;
- Berechnen eines zweiten Übertragungssignalpegels für die Upstream-Richtung durch Verwendung der neugeschätzten Dämpfung;
- Auswahl des niedrigeren Signalpegels aus dem ersten und dem zweiten Übertragungssignalpegel; und
- Anpassen des Übertragungssignalpegels der Upstream-Richtung, um den gewählten Signalpegel anzunehmen.

2. Verfahren gemäß Anspruch 1, **dadurch gekennzeichnet, dass** das Neuschätzen der Dämpfung in dem Teilnehmeranschluss aus wenigstens zwei Trägersignalen der Downstream-Richtung erfolgt.

3. Verfahren gemäß Anspruch 1 oder 2, **dadurch gekennzeichnet, dass**, wenn der Übertragungssignalpegel der Upstream-Richtung angepasst wird, um den ersten Übertragungssignalpegel anzunehmen, ein Handshake-Signal der Upstream-Richtung angepasst wird.

4. Verfahren gemäß Anspruch 1, 2 oder 3, **dadurch gekennzeichnet, dass**, wenn der Übertragungssignalpegel der Upstream-Richtung angepasst wird, um den gewählten Übertragungssignalpegel anzunehmen, ein Handshake-Signal der Upstream-Richtung angepasst wird.

5. Verfahren gemäß Anspruch 4, **dadurch gekennzeichnet, dass** der gewählte Signalpegel einen Signalpegel eines Übertragung-Trägersignalpegels der Upstream-Richtung definiert.

6. Verfahren gemäß einem der Ansprüche 1- 5, **dadurch gekennzeichnet, dass** der Schritt des Schätzens und der Schritt des Neuschätzens ein Quadratwurzel-Dämpfungsgesetz anwenden.

7. Verfahren gemäß einem der Ansprüche 1- 6, **dadurch gekennzeichnet, dass** der digitale Teilnehmeranschluss ein VDSL-Anschluss ist.

8. Verfahren gemäß Anspruch 7, **dadurch gekennzeichnet, dass** der digitale Teilnehmeranschluss eine Einträger-Modulationstechnik verwendet.

9. Anordnung zur Anpassung eines Übertragungssignalpegels einer Upstream-Richtung in einem digitalen Teilnehmeranschluss zwischen einer Ausstattung eines zentralen Büros und einer Kundenniederlassung, wobei Information aus einem Übertragungssignalpegel einer Downstream-Richtung für die Anpassung verwendet wird, **dadurch gekennzeichnet, dass** die Anordnung umfasst:
- einstellbare Mittel zum Schätzen einer Dämpfung in dem Teilnehmeranschluss aus einem Handshake-Signal der Downstream-Richtung und aus einem Trägersignal der Downstream-Richtung, und zur Berechnung eines ersten Übertragungssignalpegels für die Upstream-Richtung durch Verwendung einer geschätzten Dämpfung, wenn die einstellbaren Mittel eingestellt worden sind, um die Dämpfung aus dem Handshake-Signal zu schätzen, und zur Berechnung eines zweiten Übertragungssignalpegels für die Upstream-Richtung durch Verwenden einer zweiten geschätzten Dämpfung, wenn die einstellbaren Mittel eingestellt worden sind, um die Dämpfung aus dem Trägersignal zu schätzen;
- Mittel zur Auswahl des niedrigeren Signalpegels aus dem ersten und dem zweiten Übertragungssignalpegel; und
- Mittel zur Anpassung des Übertragungssignalpegels der Upstream-Richtung zu Beginn einer Übertragung zwischen der Ausstattung des zentralen Büros und der Kundenniederlassung, um den gewählten Signalpegel anzunehmen.

10. Anordnung gemäß Anspruch 9, **dadurch gekennzeichnet, dass** die einstellbaren Mittel in zwei Module getrennt sind, wobei das erste Modul für die Schätzaufgaben und das zweite Modul für die Berechnungsaufgaben bestimmt ist.

11. Anordnung gemäß Anspruch 9 oder 10, **dadurch gekennzeichnet, dass** die einstellbaren Mittel ein Quadratwurzel-Dämpfungsgesetz anwenden.

12. Anordnung gemäß einem der Ansprüche 1- 6, **dadurch gekennzeichnet, dass** der digitale Teilnehmeranschluss ein VDSL-Anschluss ist.

13. Anordnung gemäß Anspruch 12, **dadurch gekennzeichnet, dass** der digitale Teilnehmeranschluss eine Einträger-Modulationstechnik verwendet.

## Revendications

1. Procédé destiné à ajuster un niveau de signal de transmission d'un sens montant dans une ligne d'abonné numérique entre un central téléphonique et un équipement des locaux d'abonné utilisant des informations provenant d'un niveau de signal de transmission d'un sens descendant pour l'ajustement, **caractérisé en ce que** le procédé ajuste le niveau de signal d'émission du sens montant au commencement d'une transmission entre le central téléphonique et l'équipement des locaux d'abonné, comprenant les étapes consistant à
- estimer une atténuation dans la ligne d'abonné à partir d'un signal d'établissement d'une liaison du sens descendant ;
- calculer un premier niveau de signal de transmission pour le sens montant en utilisant l'atténuation estimée ;
- ajuster le niveau de signal de transmission du sens montant pour qu'il soit le premier niveau de signal de transmission ;
- ré-estimer l'atténuation dans la ligne d'abonné à partir d'un signal porteur du sens descendant;
- calculer un second niveau de signal d'émission pour le sens montant en utilisant l'atténuation ré-estimée ;
- choisir le niveau de signal inférieur des premier et second niveaux de signal de transmission ; et
- ajuster le niveau de signal de transmission du sens montant pour qu'il soit le niveau de signal choisi.

2. Procédé selon la revendication 1, **caractérisé en ce que** la ré-estimation de l'atténuation dans la ligne d'abonné est réalisée à partir d'au moins deux signaux porteurs du sens descendant.

3. Procédé selon la revendication 1 ou 2, **caractérisé en ce que** lors de l'ajustement du niveau de signal de transmission du sens montant pour qu'il soit le premier niveau de transmission, d'émission, un signal d'établissement d'une liaison du sens montant est ajusté.

4. Procédé selon la revendication 1, 2 ou 3, **caractérisé en ce que** lors de l'ajustement du niveau de signal de transmission du sens montant pour qu'il soit le niveau de signal de transmission choisi, un signal d'établissement d'une liaison du sens montant est ajusté.

5. Procédé selon la revendication 4, **caractérisé en ce que** le niveau de signal choisi définit un niveau de signal d'un niveau de signal porteur de transmission du sens montant.

6. Procédé selon l'une quelconque des revendications 1 à 5, **caractérisé en ce que** l'étape d'estimation et l'étape de ré-estimation utilisent une loi d'atténuation en racine carrée.

7. Procédé selon l'une quelconque des revendications 1 à 6, **caractérisé en ce que** la ligne d'abonné numérique est une ligne VDSL (ligne d'abonné numérique à très haut débit).

8. Procédé selon l'une quelconque des revendications 1 à 7, **caractérisé en ce que** la ligne d'abonné numérique utilise une technique de modulation mono-porteuse.

9. Agencement destiné à ajuster un niveau de signal de transmission d'un sens montant dans une ligne d'abonné numérique entre un central téléphonique et l'équipement des locaux d'abonné utilisant des informations provenant d'un niveau de signal de transmission d'un sens descendant pour l'ajustement, **caractérisé en ce que** l'agencement comprend
- des moyens adaptables destinés à estimer une atténuation dans la ligne d'abonné à partir d'un signal d'établissement d'une liaison du sens descendant et à partir d'un signal porteur du sens descendant, et destiné à calculer un premier niveau de signal de transmission pour le sens montant en utilisant une atténuation estimée lorsque les moyens adaptables ont été adapté pour estimer l'atténuation à partir du signal d'établissement d'une liaison, et destinés à calculer un second niveau de signal de transmission pour le sens montant en utilisant une seconde atténuation estimée lorsque les moyens adaptables ont été adaptés pour estimer l'atténuation à partir du signal porteur ;
- des moyens destinés à choisir le niveau de signal inférieur des premier et second niveaux de signal de transmission ; et
- des moyens destinés à ajuster le niveau de signal de transmission du sens montant au commencement d'une transmission entre le central téléphonique et l'équipement des locaux d'abonné pour qu'il soit le niveau de signal choisi.

10. Agencement selon la revendication 9, **caractérisé en ce que** les moyens adaptables sont divisés en deux modules, le premier module pour les tâches d'estimation et le second module pour les tâches de calcul.

11. Agencement selon la revendication 9 ou 10, **caractérisé en ce que** les moyens adaptables utilisent une loi d'atténuation en racine carrée lors de l'estimation.

12. Agencement selon l'une quelconque des revendications 9 à 11, **caractérisé en ce que** la ligne d'abonné numérique est une ligne VDSL (ligne d'abonné numérique à très haut débit).

13. Agencement selon la revendication 12, **caractérisé en ce que** la ligne d'abonné numérique utilise une technique de modulation mono-porteuse.
